(19) Europäisches Patentamt
European Patent Office
Office européen des brevets

(11) **EP 2 214 331 A1**

(12) **EUROPEAN PATENT APPLICATION**

(43) Date of publication:
**04.08.2010 Bulletin 2010/31**

(51) Int Cl.:
***H04B 10/08*** (2006.01)

(21) Application number: **09290079.4**

(22) Date of filing: **03.02.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **Alcatel Lucent
75008 Paris (FR)**

(72) Inventor: **Franz, Bernd
74336 Brackenheim (DE)**

(74) Representative: **MERH-IP
Matias Erny Reichl Hoffmann
Paul-Heyse-Strasse 29
80336 München (DE)**

(54) **Optical channel quality monitor**

(57) An optical channel quality monitor (10) for monitoring the quality of an optical channel comprises an optical-to-electrical converter (2) receiving an optical signal (3) associated to an optical channel. Downstream of the optical-to-electrical converter (2), an electrical analog-to-digital converter (4) is provided. The optical channel quality monitor (10) further comprises histogram determining means (5) for determining a histogram (7) based on an output signal (60) of the analog-to-digital converter (4). Further, the quality monitor (10) comprises computing means (8) for computing a quality signal (QoT) based on the histogram (7), wherein the quality signal (QoT) is indicative of the transmission quality of the optical channel.

Fig. 2

EP 2 214 331 A1

**Description**

The invention relates to optical communication, in particular to an optical channel quality monitor for monitoring the quality of an optical channel of an optical transmission system.

In fiber-optics communication networks, often a plurality of different transmission paths exists to send data traffic from a transmitting node to a receiving node. The process of selecting a path in a network along which to send the traffic is called routing. The different paths may differ in the used fibers and/or in the used optical channel on a particular fiber. For transparent optical routing of data traffic a "quality-of-transmission" (QoT) signal is beneficial in order to optimally use the network resources, e.g. to switch between several different paths.

According to the "hinge model", a fiber link in an optical network typically consists of a plurality of stable fiber link sections that are sheltered from the environment and a plurality of environmentally unprotected non-stable fiber sections. The non-stable fiber link sections are referred to as "hinges" and due to temperature, mechanical vibrations or other reasons the PMD (polarization mode dispersion) characteristics of these fiber sections vary rapidly in time. The hinge model can be used to show that different channels on a fiber have different outage probabilities. Due to the different outage probabilities of the different channels of a fiber, an optical channel quality monitor for each optical channel is beneficial, which generates a QoT signal associated to the respective optical channel.

Such QoT signal can be derived from the FEC (forward error correction) processing in a transmission system using FEC, e.g. from the measured BER (bit error rate). Such solution has the drawback that for determining the QoT a complete receiver is required. Such QoT signal is often determined in an intermediate node of an optical transmission path (for routing purposes). In transparent networks, e.g. transparent network using all-optical switches, providing a complete receiver just for determining a QoT signal is not economic. Another drawback of deriving a QoT signal from the FEC is the high latency of the QoT signal due to the delay time associated with the time-consuming signal processing. This high latency inhibits fast reaction, especially in case of fast varying PMD.

Hence, it is an object of the present invention to provide an optical channel quality monitor for computing a QoT signal, with the optical channel quality monitor overcoming said drawbacks. A further object of the invention is to provide a corresponding method for monitoring the quality of an optical channel.

These objects are achieved by the optical channel quality monitor and the method for monitoring the quality of the optical channel according to the independent claims.

According to a first aspect of the invention, an optical channel quality monitor for monitoring the quality of an optical channel comprises an optical-to-electrical converter (OEC) receiving an optical signal associated to an optical channel. Optionally, a DLI (delay line interferometer) for demodulating a DPSK (differential phase shift keying) optical signal may be arranged upstream of the OEC such that the demodulated electrical signal is an intensity-keyed signal. Downstream of the OEC, an electrical analog-to-digital converter (ADC) is provided. The OEC and the ADC may be coupled via one or more amplifiers and/or other electronic circuitry. The optical channel quality monitor further comprises histogram determining means for determining a histogram based on an output signal of the ADC. Further, the quality monitor comprises computing means for computing a quality signal based on the histogram, wherein the quality signal is indicative of the transmission quality of the optical channel. The quality monitor may determine the quality signal once or may update the quality signal over time.

The quality signal as generated by the inventive quality monitor may be determined in much lower time compared to a quality signal derived from an FEC algorithm with high computing effort. The quality signal may be computed within a few microseconds allowing for very fast reaction on varying distortions, in particular in case of PMD originated distortions. Moreover, the circuitry effort is lower (no complete receiver is needed).

The quality monitors allows a better use of optical networks with high PMD.

Preferably, the histogram determining means are configured to determine - for each of a plurality of disjoint input signal intervals - the frequency of occurrence the input signal of the analog-to-digital converter is in the particular input signal interval. This gives an estimate for the various probabilities of the various voltage slices of the received signal.

The histogram determining means may determine an updated histogram every n-samples or may continuously update the histogram.

The output signal of the ADC can take one of a plurality of discrete possible output signal values at a time, e.g. one value of the discrete possible output signal values 0 to 15. This allows to assign these discrete output signal values to disjoint bins of a histogram. A single discrete signal value may be associated to a respective bin of the histogram. Alternatively, a set of a plurality of (in amplitude) adjacent possible signal values (e.g. two or four adjacent possible signal values) may be associated to a bin of the histogram.

Preferably, the histogram determining means are configured to determine - for each value of a plurality of the discrete output signal values (in particular for all possible values) - the frequency of occurrence the output signal of the ADC takes the respective output signal value. In this case, the histogram determining means may count - for each possible output signal value - the number of times the output signal of the ADC takes the respective output signal value. E.g. the histogram determining means may count the number of times the output signal has a value of 0, the number of times the output signal has a value of 1, the number of times the output signal has a value of 2 etc. Accordingly, the histogram determining means may comprise a plurality of counters, wherein each counter is associated to a respective possible output signal value, and each counter is configured to determine the frequency of occurrence the output signal of the ADC takes the associated output signal value. The counter may count each incident when the output signal takes the respective signal value or only every $m^{th}$ (with $m \geq 2$, e.g. n = 1000) incident.

Alternatively, the histogram determining means may be configured to determine - for each set of a plurality of disjoint sets of adjacent output signal values - the frequency of occurrence the output signal of the ADC takes any output signal value of the respective set, e.g. the frequency of occurrence the output signal has either a value of 0, 1 or 2 (here: the values 0, 1 and 2 form a set). In this case, the histogram determining means may count - for each disjoint set - the number of times the output signal of the ADC takes any value of the respective set of output signal values. Also, a plurality of counters may be used to determine the various frequencies of occurrence of the various disjoint sets of discrete signal values (one counter for one set). E.g. the frequency of occurrence for each disjoint set of 2 possible output value at the output of an ADC with N = 16 different possible output values may be separately counted by 8 counters. The alternative approach reduces the (horizontal) resolution of the histogram. Reducing the resolution may result in reduced computing effort and less power consumption (e.g. due to a reduced number of counters).

Preferably, the count values of the counters are typically readout and processed by the following circuitry every n samples, with n >>1, e.g. every 10000 samples or every 128000 samples. Thus, the circuitry downstream of the counters can operate with much lower operating clock speed.

The ADC may be any type of ADC, e.g. a flash-type ADC or an ADC based on successive approximation. According to a preferred embodiment, the ADC is a flash-type ADC. Such flash-type ADC comprises a bank of comparators associated to different signal thresholds.

Using a flash-type ADC having a plurality of comparators has the advantage that the sampling is very fast, allowing to sample high-speed fiber-optics signals (e.g. a signal at a data rate of 40 or 43 Gbit/s).

Moreover, in case of using a flash-type ADC, the output signals of the comparators can be easily coupled to a bank of counters. Accordingly, the outputs of the bank of comparators are preferably coupled to the inputs of the plurality of counters.

The bank of comparators (typically $2^b-1$ = N -1 comparators in a b bit-ADC) in a flash-type ADC typically generates a thermometer code, where all comparator outputs up to a particular comparator are logically high and the remaining comparators outputs are low logically low. The outputs of the plurality of comparators are preferably coupled to the inputs of the plurality of counters via a code converter configured to output a 1-of-N coded signal, wherein - at a time - one bit is in a first binary state (e.g. high) and the remaining respective N-1 bits are in a second binary state (e.g. low) different from the first binary state (e.g. high). The position of the respective bit in the first binary state (e.g. high) indicates the digital signal value. In this case, each counter of N counters can be assigned to a respective bit line of the 1-of-N coded signal and can count the number of times the respective bit is high. The code converter may be realized e.g. by means of XOR gates as discussed in detail later on.

The analog-to-digital converter may have N (e.g. N = 16) output ports for indicating a digital signal value and may be configured to produce a digital output signal using a 1-of-N code (e.g. 1-of-16 code). As discussed above the 1-of-N code is **characterized in that** - at a time - one respective output port is in a first binary state (e.g. high state) and the remaining respective output ports are in a second binary state (e.g. low state) different from the first binary state. In this case, the histogram determining means preferably comprise a plurality of at least N counters, each counter associated to an output port of a respective counter and each counter configured to determine the frequency of occurrence the associated output port is in the first binary state (e.g. high state).

According to a preferred embodiment, the computing means are configured to determine parameters characterizing the statistical distribution in the histogram. Preferably, the computing means estimate based on the at least a mean value and at least a standard deviation value. Preferably, - for each symbol value of the symbol alphabet of the input signal of the ADC -

- a mean value for the respective symbol value, and
- a standard deviation value for the respective symbol value

is estimated.

In case the input signal to the ADC is a distorted amplitude-keyed signal, the computing means preferably compute a mean value for the low state and a mean value for the high state. Also, the computing means preferably compute a standard deviation value for the low state and a standard deviation value for the high state.

For determining the mean values and standard deviation values for two states, one should assign some of the possible output signal values to the low state and some of the possible output signal values to the high state. Accordingly, the mean-values and standard deviation value for one state are computed based only on the counter states of the counters assigned to the state respective state (e.g. the counters assigned to the lower half of possible output signal values are assigned to the low state and the counters assigned to the higher half of possible output signal values are assigned to the high state).

Based on the mean-values and the standard deviation values, the computing means can compute the quality signal. The quality signal may correspond to a signal indicating a signal-to-noise ratio. The computing means may compute a signal part in dependency on the mean values, and the computing means may compute a noise part in dependency on the standard deviation values. The computing means may divide the computed signal part and the computed noise part.

In case the input signal of analog-to-digital converter is an amplitude-keyed signal with (static) two states (e.g. 0 and 1) having different signal amplitudes, the quality signal may be computed to be proportional to the difference of the mean values of the two states or to the square of the difference.

The quality signal may be computed to be inversely proportional to the sum of the standard deviation values of the two states or to the square of the sum.

Preferably, the computing means are configured to compute the quality signal QoT based on the following formula:

$$QoT = \left( \frac{\mu_h - \mu_l}{\sigma_h + \sigma_l} \right)^2 \quad ,$$

wherein the term $\mu_h$ indicates the estimated mean value of the first binary state (e.g. high state), the term $\mu_l$, indicates the estimated the mean value of the second binary state (e.g low state), the term $\sigma_h$ indicates the estimated standard deviation value of the first binary state and the term $\sigma_l$, indicates the estimated standard deviation value of the second binary state.

In this case the quality signal QoT is roughly proportional to the logarithm of the BER, i.e. QoT ~ log (BER).

It should be noted that basically the above mentioned embodiments of the invention can be arbitrarily combined. Furthermore, it should be noted that the disclosure of the invention also covers other claim combinations than the claim combinations which are explicitly given by the back references in the dependent claims, i.e. the claims can be basically combined in any order.

A second aspect of the invention relates to a method for monitoring the quality of an optical channel. The method steps are analog to the elements of the optical channel quality monitor as discussed above: The method comprises the step of optical-to-electrical converting of an optical signal associated to the optical channel. Moreover, the method comprises the step of analog-to-digital converting downstream of the optical-to-electrical conversion. A histogram is determined based on an output signal of the analog-to-digital conversion. A quality signal is computed based on the histogram. The above remarks related to the preferred embodiments of the first aspect of the invention are basically also applicable to the second aspect of the invention.

Preferably, the output signal of the analog-to-digital conversion takes one of a plurality of discrete possible output signal values at a time, and for determining a histogram the method determines - for each value of a plurality of output signal values or for each set of a plurality of disjoint sets of adjacent output signal values

- the frequency of occurrence the output signal of the analog-to-digital conversion

  - takes the respective output signal value or
  - takes any output signal value of the respective set.

For computing a quality signal based on the histogram, the method may estimate based on the histogram - for each symbol value of the symbol alphabet of the input signal of the ADC -

- a mean value associated to the respective symbol value, and
- a standard deviation value associated to the respective symbol value.

A third aspect of the invention relates to a set of optical channel quality monitors according as discussed above, wherein the optical channels quality monitors are associated to different optical channels of a fiber link.

A fourth aspect of the invention relates to a method for routing data in an optical network, wherein the routing is controlled in dependency of at least one quality signal as generated by the optical channel quality monitor as discussed above.

The above remarks related to the preferred embodiments of the first aspect of the invention are basically also applicable to the third and fourth aspects of the invention.

The invention is explained below in an exemplary manner with reference to the accompanying drawings, wherein

Fig. 1  illustrates a first embodiment of the inventive optical channel quality mon- itor;

Fig. 2  illustrates a second embodiment of the inventive optical channel quality monitor using a 4-bit flash-type ADC;

Fig. 3  illustrates an exemplary histogram;

Fig. 4  illustrates a diagram showing the computed quality signal QoT over the measured BER for different distortion scenarios in case of DPSK modula- tion; and

Fig. 5  illustrates an embodiment of a code converter for converting the thermo- meter code at the output of the ADC comparators to a 1-of-N code.

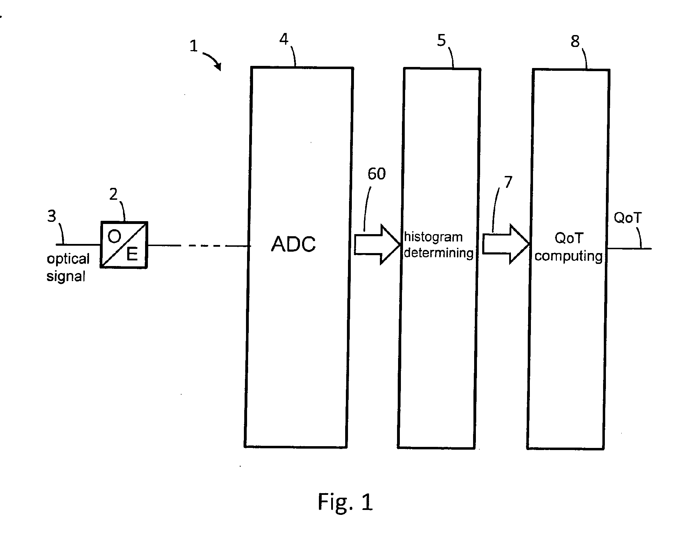

Fig. 1 shows a first embodiment 1 of the inventive optical channel quality monitor. The quality monitor 1 comprises an OEC 2 receiving an optical signal 3 associated to an optical channel. One or a plurality of optical channels may be used on a single fiber. In case of using a plurality of optical channels with different wavelengths, a plurality of quality monitors may be used, where each quality monitor is associated to a respective optical channel (optical filters upstream of the OECs 2 may be used to separate the channels). Instead of using a plurality of quality monitors, a quality monitor may be switched between the different optical channels (e.g. by means of a switchable optical filter upstream of the OEC 2).

The OEC 2 is followed by an ADC 4 and logical and/or computing circuitry for the analysis of the measured histogram.. Optionally, the OEC 2 and the ADC 4 may be connected via one or more amplifiers and/or other electronic circuitry (not shown). The ADC 4 (in combination with additional circuitry) gives a histogram of the optical signal, and a quality signal can be computed from this histogram.

In the embodiment of Fig. 1, the channel quality monitor 1 comprises histogram determining means 5 for determining a histogram 7 based on an output signal 60 of the ADC 4, with the output signal 60 containing the signal samples. The channel quality monitor 1 also contains computing means 8 for computing a quality signal QoT based on the histogram signal 7.

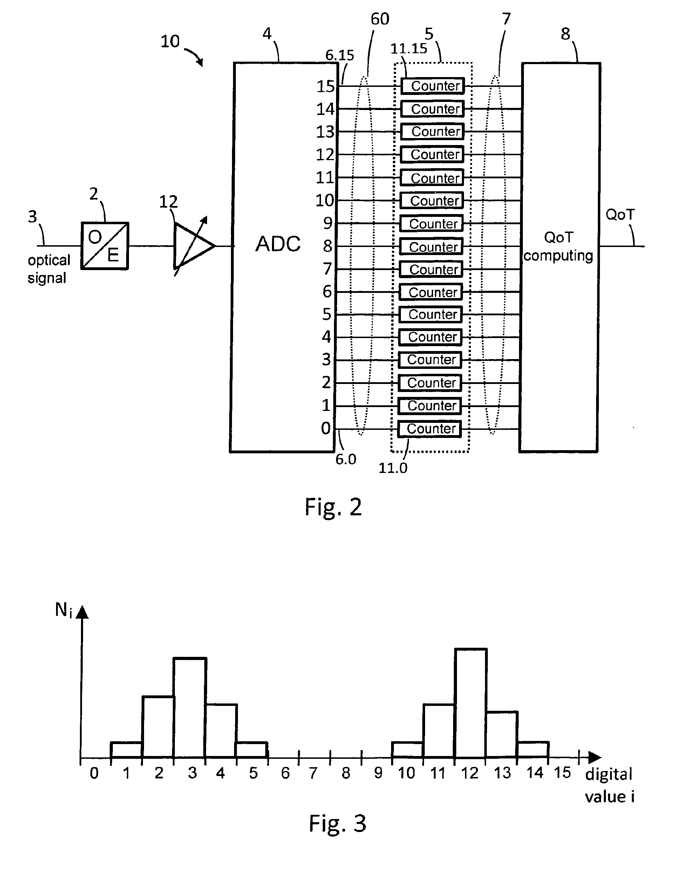

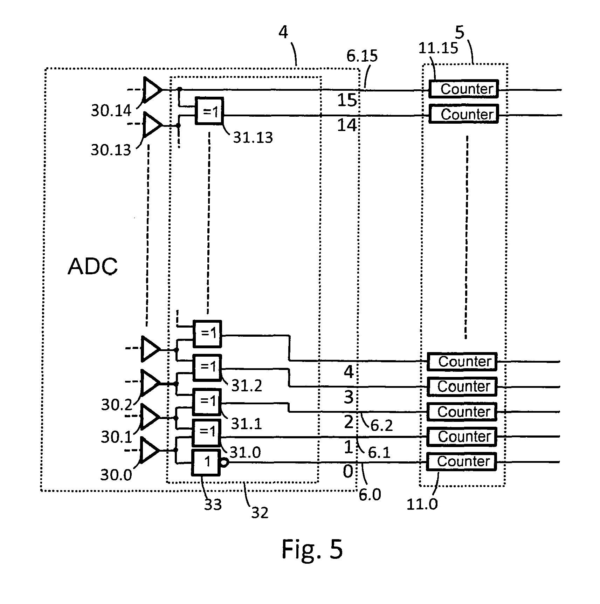

For reasons of simplification, the clock and the generation of the clock are not shown in Fig. 1 (and the following Figs. 2 and 5). Preferably, for the signal processing a clock is used (although not shown in the drawings).

Fig. 2 shows a second embodiment 10 of the inventive optical channel quality monitor. Figurative elements in Figs. 1 and 2 denoted by the same reference signs are basically the same. Here, a photo receiver 2 is followed by an ADC 4, a plurality of counters 11.i for determining a histogram 7 and a computing circuitry 8 for the analysis of the measured histogram 7. Optionally, an amplifier 12 (e.g. an automatic gain control amplifier) is arranged between the OEC 2 and the ADC 4. The ADC 4 is preferably a flash-type ADC comprising a bank of comparators. In the embodiment of Fig. 2, a 4-bit flash-type ADC 4 is used, where the output signal 60 may take one of N = 16 possible discrete output signal values. Any other ADC with more or less different possible output signal values may be used, e.g. an ADC with N = 8, N = 32 or N = 64 different output signal values.

The analog-to-digital converter may have N (here: N = 16) output ports 6.i for indicating a digital signal value and may be configured to produce a digital output signal using a 1-of-N code. Here, a 1-of-16 code having code words "00000000 00000001" = 0, "00000000 00000010" = 1, "00000000 00000100" = 2, "00000000 00001000" = 3 etc. is used. Accordingly, the ADC output signal 60 is encoded in such a way that - at a time - one respective output port 6.i is in the high state and the remaining respective output ports 6.i are in the low state, with the position of the respective output port 6.i in the high state indicating the digital value. Thus, the respective output port 6.i representing the actual voltage value is high, whereas the other output ports 6.i are low.

The outputs of the ADC comparators (not shown) are coupled to the counters 11.i. Each counter 11.i is connected to an associated output port 6.i. For converting the thermometer code as typically generated by the ADC comparators to a 1-of-N code, a code converter (not shown in Fig. 2) as part of the ADC 4 is used, which comprises XOR gates and is discussed in connection with Fig. 5.

Each counter 11.i determines the frequency of occurrence the associated output port 6.i is in the high state. Since a 1-of-N code is used, the count values of the counters 6.i represent a histogram signal 7 indicating the frequency distribution of the output signal values of the output signal 60. Each count value represents an estimate of the probability of a certain voltage slice (i.e. voltage interval) of the received signal. By means of the computed frequencies of occurrence (i.e. the probabilities for each slice) forming the histogram 7, the computing circuitry 8 internally estimates parameters describing the statistics of the histogram, e.g. mean values and standard deviations. Preferably, the computing circuit 8 internally estimates a mean value and a standard deviation value for each symbol state of the input signal of the ADC (e.g. for the high state and the low state in case of an amplitude modulated signal with two states). Based on these values, the quality signal QoT is computed.

Preferably, the count values of the counters 11.i are typically readout and processed every n samples, with $n \gg 1$, e.g. every $1 \cdot 10^4$ samples, every $1 \cdot 10^6$ samples or even higher. Thus, the circuitry downstream of the counters typically works with much lower operating clock speed. After reading out the counters 11.i, the counters 11.i are preferably reset.

Fig. 3 shows a graphical representation of an exemplary histogram 7. The x-axis represents the various possible discrete output signal values I of the signal 60, wherein the frequency of occurrence of each possible discrete output signal value i is counted by a respective counter 11.i. The y-axis represents the number $N_i$ of times the respective possible output signal value i was detected by the associated counter 11.i (e.g. the number of times the respective counter 11.i detects a logical high state at its input).

For estimating a mean value associated to the low state of the input signal of the ADC only the count values $N_i$ of the counters 11.i of the output signal values i for i = $i_{1,min}$ to $i_{1,max}$ (e.g. i = 0 to 7) are considered. For estimating a mean value associated to the high state of the input signal of the ADC only the count values $N_i$ of

the counters 11.i of the output signal values i for i = $i_{h,min}$ to $i_{h,max}$ (e.g. i = 8 to 15) are considered. Thus, each counted samples is decided to either correspond to the high state or to the low state.

The distributions for the low and high states are assumed to be Gaussian distributions. E.g. the mean value $\mu_l$ of the low state can be estimated according to the following formula:

$$\mu_l = \frac{\displaystyle\sum_{i=i_{l,min}}^{i_{l,max}}(N_i \cdot i)}{\displaystyle\sum_{i=i_{l,min}}^{i_{l,max}}(N_i)} \; .$$

In the above formula, the numerator indicates the sum of the detected sample values associated to the low state, whereas the denominator indicates the number of detected samples associated to the low state. Optionally, the computed mean value may be multiplied by the step size (e.g. 50 mV) of the ADC 4 to generate a mean value in V or mV.

Similarly, the mean value $\mu_h$ of the high state can be estimated according to the following formula:

$$\mu_h = \frac{\displaystyle\sum_{i=i_{h,min}}^{i_{h,max}}(N_i \cdot i)}{\displaystyle\sum_{i=i_{h,min}}^{i_{h,max}}(N_i)}$$

The square of the standard deviation $\sigma_l$ of the low state can be estimated according to the following formula:

$$\sigma_l^2 = \frac{\displaystyle\sum_{i=i_{l,min}}^{i_{l,max}}\left(N_i \cdot (i - \mu_l)^2\right)}{\left(\displaystyle\sum_{i=i_{l,min}}^{i_{l,max}}(N_i)\right) - 1}$$

Similarly, the square of the standard deviation $\sigma_h$ of the high state can be estimated according to the following formula:

$$\sigma_h^2 = \frac{\displaystyle\sum_{i=i_{h,min}}^{i_{h,max}}\left(N_i \cdot (i - \mu_h)^2\right)}{\left(\displaystyle\sum_{i=i_{h,min}}^{i_{h,max}}(N_i)\right) - 1}$$

The above formulas are only exemplary. Other formulas may be used to determine values which are indicative of the mean and the standard deviation.

Based on the estimated values, the quality signal QoT may be computed based on the following formula:

$$QoT = \left(\frac{\mu_h - \mu_l}{\sigma_h + \sigma_l}\right)^2$$

The formula of the quality signal QoT corresponds to the square of the parameter Q as computed in formula 4.5.11 in section 4.5.1 of the textbook "Fiber-Optic Communication Systems", G. Agrawal, 3rd edition, Wiley-Interscience, 2002. Section 4.5.1 describing the determination of the parameter Q and the relation between the BER and the parameter Q is hereby incorporated by reference.

The mean values, standard deviation values and/or the quality signal QoT are preferably updated every n samples, with n >>1, e.g. every $1 \cdot 10^4$ samples. It is also possible to update the values continuously.

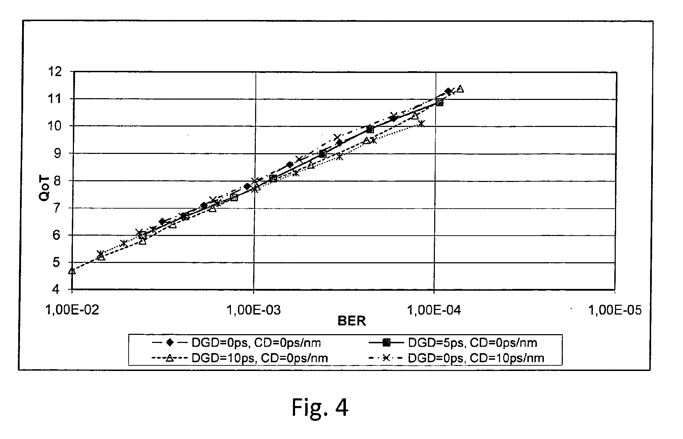

Fig. 4 shows the simulated relationship between the computed quality signal QoT and the BER. Here, DPSK modulation is assumed (i.e. a DLI for DPSK demodulation is to be arranged upstream of the OEC 2). Various curves for different distortion scenarios are shown (DGD - differential group delay; CD - chromatic dispersions). As evident from Fig. 4, the computed quality signal QoT is roughly proportional to the logarithm of the BER, i.e. QoT ~ log(BER). Thus, although the statistics are typically not Gaussian (especially in case of distortions), the computed quality signal QoT (which is based on the approximation of assuming a Gaussian distribution) is a good indicator for the actual BER. The approximation gives a good relationship between the computed QoT and the measured BER.

Fig. 5 shows an embodiment of the flash-type ADC 4 (here: a 4 bit ADC having N = $2^n$ = $2^4$ = 16 different possible discrete output values) using a code converter 32 for converting the thermometer code at the output of the N-1 comparators 30.i to a 1-of-N code at the output of the ADC 4. Each comparator 30.i is assigned to a different threshold voltage (not shown) which is used for comparison with the comparator input voltage. In Fig. 5, the threshold voltages increase with increasing values for i. It is further assumed that the counters 11.i each count a logical high state at their inputs. The code converter 32 inverts the output of the comparator 30.0 with the lowest threshold voltage via an inverter 33 and feeds the inverted signal to the counter 11.0. Thus, when the comparator 30.0 with the lowest threshold voltage is in the logically low state, the counter 11.0 counts a high state. When the output of the comparator 30.0 with the lowest threshold voltage changes from low to high, the counter 11.1 only counts the high state of comparator 30.0 if the comparator 30.1 with the next larger threshold is in low state. This is ensured by an XOR gate 31.0 which compares the outputs of the two comparators 30.0 and 30.1 and only outputs a logically high state if the output of comparator 30.1 is logically low. The remaining XOR gates 31.1 to 31.14 work in the same way. The output signal of the comparator 30.14 may be directly fed to the counter 11.15.

**Claims**

1. An optical channel quality monitor (1, 10) for monitoring the quality of an optical channel comprising:

   - an optical-to-electrical converter (2) receiving an optical signal (3) associated to an optical channel;
   - an analog-to-digital converter (4) downstream of the optical-to-electrical converter (2);
   - histogram determining means (5) for determining a histogram (7) based on an output signal (60) of the analog-to-digital converter (4); and
   - computing means (8) for computing a quality signal (QoT) based on the histogram (7), the quality signal (QoT) indicative of the transmission quality of the optical channel.

2. The optical channel quality monitor (1, 10) of claim 1, wherein

   - the output signal (60) of the analog-to-digital converter (4) takes one of a plurality of discrete possible output signal values at a time, and
   - the histogram determining means (5) are configured to determine - for each value of a plurality of the possible output signal values or for each set of a plurality of disjoint sets of adjacent possible output signal values - the frequency of occurrence the output signal (60) of the analog-to-digital converter (4)

      - takes the respective output signal value or
      - takes any output signal value of the respective set.

3. The optical channel quality monitor (1, 10) of claim 2, wherein

   - the histogram determining means (5) comprise a plurality of counters (11.i),
   - each counter (11.i) is associated to a respective possible output signal value or to a respective set of adjacent possible output signal values, and
   - each counter (11.i) is configured to determine the frequency of occurrence the output signal (60) of the analog-to-digital converter (4) takes the associated output signal value or takes any output signal value of the respective set.

4. The optical channel quality monitor (1, 10) of claim 3, wherein the analog-to-digital converter (4) is a flash-type analog-to-digital converter comprising a plurality of comparators (30.i) associated to different signal thresholds, wherein the outputs of the plurality of comparators (30.i) are coupled to the inputs of the plurality of counters (11.i).

5. The optical channel quality monitor (1, 10) of claim 4, wherein the outputs of the plurality of comparators (30.i) are coupled to the inputs of the plurality of counters (11.i) via a code converter (32) configured to output a 1-of-N coded signal, wherein - at a time - one bit is in a first binary state and the remaining respective N-1 bits are in a second binary state different from the first binary state.

6. The optical channel quality monitor (1, 10) of claim 1, wherein

   - the analog-to-digital converter (4) has N output ports (6.i) for indicating a digital signal value, and
   - the analog-to-digital converter (4) is configured such that the output signal (60) of the analog-to-digital-converter (4) has a 1-of-N code, wherein - at a time - one respective output port (6.i) is in a first binary state and the N-1 remaining respective output ports (6.i) are in a second binary state different from the first binary state.

7. The optical channel quality monitor (1, 10) of claim 6, wherein the histogram determining means (5) comprise a plurality of counters (11.i), each counter (11.i) associated to a respective output port of the analog-to-digital converter (4) and each counter (11.i) configured to determine the frequency of occurrence the associated output port (6.i) is in the first binary state.

8. The optical channel quality monitor (1, 10) of claim 1, wherein the computing means (8) are configured to estimate based on the histogram (7) - for each symbol value of the symbol alphabet of the input signal of analog-to-digital converter (4) -

- a mean value associated to the respective symbol value or a value indicative thereof, and
- a standard deviation value associated to the respective symbol value or a value indicative thereof.

9. The optical channel quality monitor (1, 10) of claim 8, wherein the symbol alphabet of the input signal of analog-to-digital converter (4) consists of two states with different signal amplitude, and the quality signal (QoT) is

- proportional to the difference of the two states' mean values or of values indicative thereof or to the square of the difference and
- inversely proportional to the sum of the two states' standard deviation values or of values indicative thereof or to the square of the sum.

10. The optical channel quality monitor (1, 10) of claim 8, wherein the computing means (8) are configured to compute the quality signal QoT based on the following formula:

$$QoT = \left(\frac{\mu_h - \mu_l}{\sigma_h + \sigma_l}\right)^2 \quad ,$$

wherein the term $\mu_h$ refers to the mean value of the first state or to a value indicative thereof, the term $\mu_l$ refers to the mean value of the second state or to a value indicative thereof, the term $\sigma_h$ refers to the standard deviation value of the first state or to a value indicative thereof and the term $\sigma_l$ prefers to the standard deviation value of the second state or to a value indicative thereof.

11. The optical channel quality monitor (1, 10) of claim 1, wherein the histogram determining means (5) are configured to determine - for each of a plurality of disjoint input signal intervals - the frequency of occurrence the input signal of the analog-to-digital converter (4) is in the particular input signal interval.

12. A method for monitoring the quality of an optical channel, the method comprising:

- optical-to-electrical converting of an optical signal (3) associated to the optical channel;
- analog-to-digital converting downstream of the optical-to-electrical conversion;
- determining a histogram (7) based on an output signal (60) of the analog-to-digital conversion; and
- computing a quality signal (QoT) based on the histogram (7), the quality signal (QoT) indicative for the transmission quality of the optical channel.

13. The method of claim 12, wherein the output signal (60) of the analog-to-digital conversion takes one of a plurality of discrete output signal values at a time, and determining a histogram (7) comprises:

- determining - for each value of a plurality of the output signal values or for each set of a plurality of disjoint sets of adjacent output signal values - the frequency of occurrence the output signal (60) of the analog-to-digital conversion

- takes the respective output signal value or
- takes any output signal value of the respective set;

and wherein computing a quality signal based on the histogram (7) comprises:
- estimating based on the histogram (7) - for each symbol value of the symbol alphabet of the input signal of the analog-to-digital conversion-

- a mean value associated to the respective symbol value or a value indicative thereof, and
- a standard deviation value associated to the respective symbol value or a value indicative thereof.

14. A plurality of optical channel quality monitors (1, 10) according to claim 1, wherein the optical channel quality monitors (1, 10) are associated to different optical channels of a fiber link.

15. A method for routing data in an optical network, wherein the routing is controlled in dependency of at least one quality signal (QoT) as generated by the optical channel quality monitor (1, 10) of claim 1.

Fig. 1

Fig. 2

Fig. 3

Fig. 4

Fig. 5

Europäisches
Patentamt

European
Patent Office

Office européen
des brevets

# EUROPEAN SEARCH REPORT

Application Number

EP 09 29 0079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/063533 A (ECI TELECOM LTD [IL]; MAHLAB URI [IL]) 7 June 2007 (2007-06-07)<br>* page 4, line 1 - page 5, line 6 *<br>* page 9, line 26 - page 10, line 14 *<br>* page 11, line 6 - page 12, line 4; figures 1-5 *<br>----- | 1-15 | INV.<br>H04B10/08 |
| X | WO 2004/073244 A (UNIV MELBOURNE [AU]; WONG ELAINE [AU]; NIRMALATHAS THAS A [AU]; LIM CH) 26 August 2004 (2004-08-26)<br>* page 3, line 1 - page 5, line 27 *<br>* page 8, line 18 - page 11, line 19; figures 3,4 *<br>----- | 1-15 | |
| X<br><br>A | US 6 295 614 B1 (PETERS KURT [US] ET AL) 25 September 2001 (2001-09-25)<br>* column 1, line 56 - column 2, line 24; figures 2,4 *<br>----- | 1,12,14, 15<br>2-11,13 | |
| X | SHAKE I ET AL: "AVERAGED Q-FACTOR METHOD USING AMPLITUDE HISTOGRAM EVALUATION FOR TRANSPARENT MONITORING OF OPTICAL SIGNAL-TO-NOISE RATIO DEGRADATION IN OPTICAL TRANSMISSION SYSTEM"<br>1 August 2002 (2002-08-01), JOURNAL OF LIGHTWAVE TECHNOLOGY, IEEE SERVICE CENTER, NEW YORK, NY, US, PAGE(S) 1367 - 1376 , XP001226377<br>ISSN: 0733-8724<br>* the whole document *<br>----- | 1,12 | TECHNICAL FIELDS SEARCHED (IPC)<br><br>H04B |
| X | EP 1 276 253 A (NIPPON TELEGRAPH & TELEPHONE [JP]) 15 January 2003 (2003-01-15)<br>* column 10, paragraph 26 - column 14, paragraph 41 *<br>----- | 1,12 | |

The present search report has been drawn up for all claims

| Place of search | Date of completion of the search | Examiner |
|---|---|---|
| Munich | 10 June 2009 | Koch, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                    

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 29 0079

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2009

| Patent document cited in search report | | Publication date | Patent family member(s) | | Publication date |
|---|---|---|---|---|---|
| WO 2007063533 | A | 07-06-2007 | EP 1955453 A1<br>US 2008279550 A1 | | 13-08-2008<br>13-11-2008 |
| WO 2004073244 | A | 26-08-2004 | CA 2519392 A1<br>EP 1602189 A1 | | 26-08-2004<br>07-12-2005 |
| US 6295614 | B1 | 25-09-2001 | AU 4333001 A<br>WO 0165370 A1 | | 12-09-2001<br>07-09-2001 |
| EP 1276253 | A | 15-01-2003 | AT 336114 T<br>DE 60213726 T2<br>US 2003011837 A1 | | 15-09-2006<br>16-08-2007<br>16-01-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. Agrawal.** Fiber-Optic Communication Systems. Wiley-Interscience, 2002